# EUROPEAN PATENT APPLICATION

(11) **EP 4 640 595 A1**
(43) Date of publication of application: **29.10.2025**
(21) Application number: 23907043.6
(22) Date of filing: 19.12.2023
(51) Int. Cl.: B65G 43/02, G01M 99/00

(54) **CONVEYANCE SYSTEM**

(30) Priority: 22.12.2022 JP 2022205793
(71) Applicant: DENSO CORPORATION, Kariya-city, Aichi 448-8661 (JP)
(72) Inventor: MARUYAMA Yumi, Kariya-city, Aichi 448-8661 (JP); MAWATARI Kazuaki, Kariya-city, Aichi 448-8661 (JP)
(74) Representative: Kuhnen & Wacker Patent- und Rechtsanwaltsbüro PartG mbB
(86) International application number: PCT/JP2023/045501
(87) International publication number: WO 2024/135683

(57) **Abstract**

A conveyance system includes a conveyance body (20, 21) that moves along a conveyance path (10, 11, 12, 13), a sensor unit (70) that obtains data relating to the conveyance body, and an identification unit (81) that identifies stoppage data generated due to the conveyance body stopping from the data obtained by the sensor unit.

## Description

### CROSS REFERENCE TO RELATED APPLICATIONS

The present application is based on Japanese Patent Application No. 2022-205793 filed on December 12, 2022, and the entire disclosures of which are incorporated herein by reference.

### TECHNICAL FIELD

The present disclosure relates to a conveyance system.

### BACKGROUND ART

A conveyance system used in a production line for automobile parts and the like has long conveyance paths, so workers need to spend a lot of time on daily inspections. If an abnormality occurs in the conveyance paths, the production line will be stopped for a long period of time until the conveyance system is restored and inspected.

In recent years, a technique has been developed that detects abnormalities in the conveyance paths based on the results obtained by patrolling a multi-sensor including a vibration sensor along the conveyance paths and inputting sensor data into a machine learning model, leading to more efficient energy consumption in factories (see, for example, Patent Literature 1).

### PRIOR ART LITERATURE

### PATENT LITERATURE

Patent Literature 1: JP 2020-27095 A

### SUMMARY OF INVENTION

In a conveyance system, the time from the start to the end of conveyance varies depending on the condition of the conveyance path. For example, before a processing step for a workpiece, a switching of the conveyance path, a transfer of the workpiece to another pallet, or the like, movement of the pallet is stopped by a stopper, which is installed on the conveyance path. Then, when preparation for the processing step or the like is completed, the stopper is released and the movement of the pallet is resumed.

The presence of such a stoppage by the stopper and the length of time period of the stoppage vary depending on the congestion of the conveyance paths. Therefore, for example, when a pallet equipped with a multi-sensor is patrolled together with other pallets, the time to patrol changes, resulting in variation in the amount of data from the multi-sensor. Therefore, it is difficult to determine abnormalities in the conveyance paths by inputting the sensor data into a machine learning model.

In view of the above, an object of the present disclosure is to provide a conveyance system that can easily determine an abnormality in a conveyance path.

According to an aspect of the present disclosure, a conveyance system includes a conveyance body that moves along a conveyance path, a sensor unit that obtains data relating to the conveyance body, and an identification unit that identifies stoppage data generated due to the conveyance body stopping from the data obtained by the sensor unit.

In such a configuration, since the stoppage data is identified from the data obtained by the sensor unit, it is possible to reduce the variation in the amount of data used for abnormality determination. As a result, it is possible to easily determine an abnormality in the conveyance path.

Reference numerals in parentheses attached to components or the like indicate an example of a correspondence relationship between the components or the like and specific components or the like described in embodiments to be described later.

### BRIEF DESCRIPTION OF DRAWINGS

FIG. 1 is a diagram showing a configuration of a conveyance system according to a first embodiment.
FIG. 2 is a diagram showing a configuration of a conveyance system according to the first embodiment.
FIG. 3 is a block diagram showing a configuration of a sensor unit and a control unit.
FIG. 4 is a flowchart of a patrolling process of the sensor unit.
FIG. 5 is a flowchart of an abnormality determination process.
FIG. 6 is a diagram showing an example of time series data obtained by the sensor unit.
FIG. 7 is a diagram showing an example of determination data.
FIG. 8 is a diagram showing an example of time series data obtained by the sensor unit.
FIG. 9 is a diagram showing a configuration of a conveyance system according to a second embodiment.

### DESCRIPTION OF EMBODIMENTS

Hereinafter, embodiments of the present disclosure will be described with reference to the drawings. The same or equivalent parts are denoted by the same reference numerals throughout the embodiments described hereinafter.

### (First Embodiment)

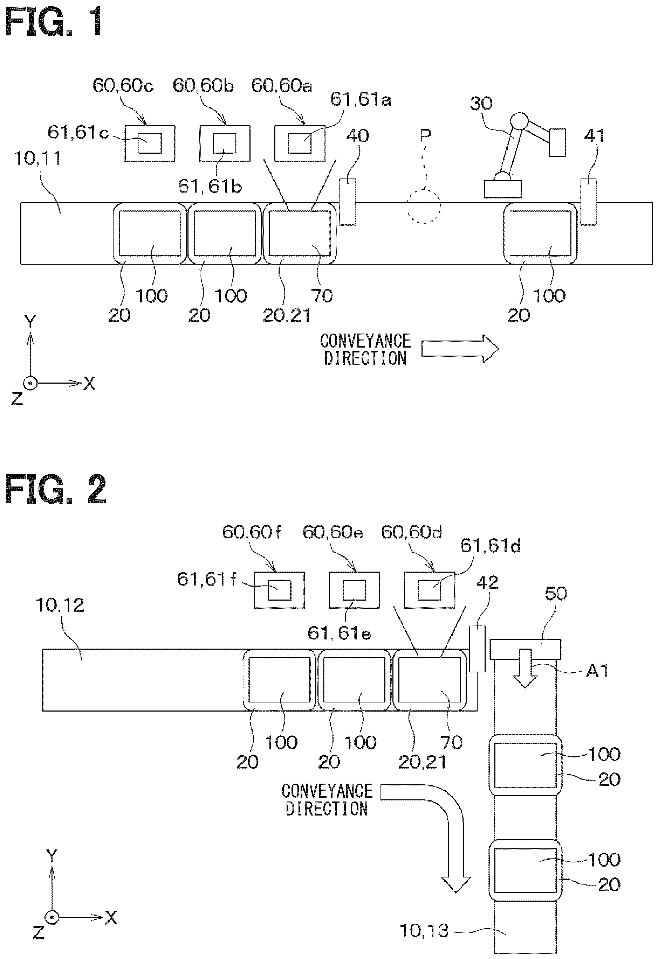

A first embodiment will be described. As shown in FIGS. 1 to 3, a conveyance system of a present embodiment includes a conveyance path 10, a pallet 20 as a conveyance body, a processing device 30, stoppers 40 to 42 as stopping parts, a push-out device 50, a display unit 60, a sensor unit 70, and a control unit 80. The conveyance system constitutes a production line for manufacturing automobile parts and the like, which conveys a workpiece 100 placed on a pallet 20 and performs processes such as screw tightening on the workpiece 100 while the workpiece 100 is being conveyed.

The conveyance path 10 conveys the pallet 20. The conveyance path 10 is composed of a conveyor having a conveyance surface that comes into contact with the pallet 20 or the workpiece 100 on the pallet 20. For example, the conveyance path 10 is composed of a belt conveyor, a chain conveyor, a screw conveyor, a grip conveyor, a side grip conveyor, or the like.

The pallet 20 carries the workpiece 100 and travels along the conveyance path 10. The workpiece 100 may be, for example, an object to be processed by a processing equipment, or may be a product during or after the manufacturing. To inspect the conveyance path 10, the sensor unit 70 is mounted on the pallet 20 and travelled along the conveyance path 10. The pallet 20 equipped with the sensor unit 70 is referred to as the pallet 21.

As shown in FIG. 1 and FIG. 2, the conveyance system includes conveyance paths 11 to 13, as the conveyance path 10. Two directions included in a horizontal plane and being perpendicular to each other are defined as an X direction and a Y direction, and a direction perpendicular to the X direction and the Y direction is defined as a Z direction.

As shown in FIG. 1, the conveyance path 11 extends in the X direction, and the processing device 30 and the stoppers 40 and 41 are disposed on the conveyance path 11. The processing device 30 performs processing such as screw tightening on the workpiece 100, and is composed of a robot hand or the like.

The stopper 40 stops the pallet 20 waiting to be processed by the processing device 30. The stopper 40 is disposed at a position upstream of the processing device 30 in a conveyance direction of the conveyance path 11. The stopper 41 stops the pallet 20 being processed by the processing device 30. The stopper 41 is disposed in the vicinity of the processing device 30 on the conveyance path 11. The stoppers 40 and 41, and a stopper 42, which will be described later, may each have a configuration of such as a rod-shaped member protruding from below the conveyance path 10, or a plate-shaped member protruding from the side of the conveyance path 10.

The conveyance paths 12 and 13 constitute a part of the conveyance system that switches the conveyance direction of the pallet 20. Specifically, the conveyance paths 12 and 13 extend in the X direction and the Y direction, respectively. When the pallet 20 moves from the conveyance path 12 to the conveyance path 13, the conveyance direction of the pallet 20 is switched from the X direction to the Y direction.

As shown in FIG. 2, the stopper 42 is disposed on the conveyance path 12. The stopper 42 is disposed at the end of the conveyance path 12 so as to stop the pallet 20 waiting for the conveyance path to be switched. The push-out device 50 is disposed on the conveyance path 13. The push-out device 50 is disposed at the starting end of the conveyance path 13, and the pallet 20 after being switched to the conveyance path 13 is pushed out in the Y direction as the push-out device 50 moves in a direction shown by an arrow A1.

The conveyance system also includes a non-illustrated conveyance path, and on this conveyance path, a process of transferring items mounted on a pallet 20 to another pallet 20 and the like is carried out.

The display unit 60 displays an identifier 61 that stores information regarding the stopping of the pallet 20. This information includes, for example, a work step to be performed next on the pallet 20, a stopping position of the pallet 20, a travelling direction, and the like. As the identifier 61, for example, a two-dimensional code such as a QR code (registered trademark), a micro QR code, or an rMQR code can be used. The display unit 60 is configured, for example, by attaching a sticker on which the identifier 61 is printed to a wall near a location where the pallet 20 is stopped to wait for the processing, the switching to another conveyance path, the transferring of items to another pallet. In the sections of the conveyance system shown in FIG. 1 and FIG. 2, the display units 60 are disposed at positions upstream of the stoppers 40 and 42.

One or more display units 60 are provided for each stopping location. There is no limit to the number of the display units 60, but it is desirable to provide one or more display units 60 in accordance with the number of pallets 20 expected to be stopped by the stopper 40 or 42 and the stopping position.

As shown in FIG. 1, three display units 60 are disposed in front of the stopper 40 on the conveyance path 11. The three display units 60 are referred to as display units 60a to 60c in this order as separating from the stopper 40. The identifiers 61 displayed on the display units 60a, 60b, and 60c are referred to as identifiers 61a, 61b, and 61c, respectively.

The display units 60a to 60c are disposed at locations corresponding to the positions of the first to third pallets 20 stopped by the stopper 40, respectively. Specifically, the display unit 60a is disposed so that, when the pallet 21 is the first pallet in a line of pallets 20 stopped by the stopper 40, the identifier 61a comes within a reading range of a reading unit 71, which will be described later. Similarly, the display units 60b and 60c are each disposed so that, when the pallet 21 is the second or third pallet in the line of pallets 20 stopped by the stopper 40, the identifier 61b or 61c comes within the reading range of the reading unit 71.

The identifiers 61a to 61c store information on the processing device 30, position information on the conveyance path 11, information on the conveyance direction of the conveyance path 11, and the like. Further, the identifiers 61a to 61c store position information on a stoppage section caused by the stopper 40. Specifically, the identifiers 61a to 61c store information indicating that the identifiers 61a to 61c are, respectively, on the first, second, and third positions waiting for the processing by the processing device 30.

As shown in FIG. 2, three display units 60 are disposed at positions upstream of the stopper 42 on the conveyance path 12. The three display units 60 are referred to as display units 60d to 60f in this order as separating from the stopper 42. The identifiers 61 displayed on the display units 60d to 60f are referred to as identifiers 61d, 61e, and 61f, respectively.

The display units 60d to 60f are disposed at locations corresponding to the positions of the first to third pallets 20 stopped by the stoppers 42, respectively. Specifically, the display units 60d to 60f are each disposed so that, when the pallet 21 is the first, second or third pallet in the line of pallets 20 stopped by the stopper 42, the identifier 61d, 61e, or 61f comes within the reading range of the reading unit 71.

The identifiers 61d to 61f store information on the switching of the conveyance paths, position information on the conveyance paths 12 and 13, information on the conveyance directions of the conveyance paths 12 and 13, and the like. As will be described later, in the conveyance system, the pallet 21 equipped with the sensor unit 70 is caused to patrol along the conveyance path 10 to determine whether there is an abnormality in the conveyance path 10. At this time, there is a possibility that, even when the conveyance path is switched and the conveyance direction is changed, the sensor unit 70 may not change direction and may be conveyed in the same orientation. In this case, since the identifier 61 has the information on the conveyance direction stored therein, it is possible to perform data pre-processing that interchanges the X-direction and the Y-direction on an acceleration data of the sensor unit 70 in step S22, which will be described later. As such, it is possible to perform analysis in accordance with the conveyance direction. The same applies to a change in the conveyance direction due to the transferring of the pallet.

Further, the identifiers 61d to 61f store position information on a stoppage section caused by the stopper 42. Specifically, the identifiers 61d to 61f store information indicating that the identifiers 61d to 61f are, respectively, on the first, second, and third positions waiting for the switching of the conveyance path.

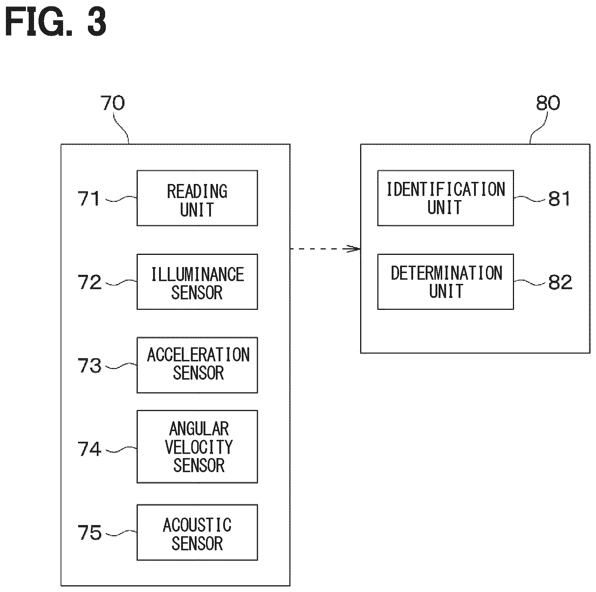

As shown in FIG. 3, the sensor unit 70 includes the reading unit 71, an illuminance sensor 72, an acceleration sensor 73, an angular velocity sensor 74, and an acoustic sensor 75. In the present embodiment, these unit and sensors are mounted on the pallet 21 and travel along the conveyance path 10.

The reading unit 71 reads the identifier 61. The reading unit 71 is composed of a camera that captures an image of the periphery of the pallet 21, a scanner module, or the like.

The illuminance sensor 72 measures the illuminance of the display unit 60. The result of the measurement of the illuminance by the illuminance sensor 72 is used to determine whether the display unit 60 is in a state where the identifier 61 can be correctly read by the reading unit 71. As described above, in the present embodiment, the illuminance sensor 72 is mounted on the pallet 21 together with other sensors. Alternatively, the illuminance sensor 72 may be disposed near the display unit 60.

The acceleration sensor 73 measures the acceleration of the pallet 21. The acceleration sensor 73 is configured to measure the accelerations in three directions perpendicular to each other. The angular velocity sensor 74 measures the angular velocity of the pallet 21. The angular velocity sensor 74 is configured to measure the angular velocities around three mutually perpendicular axes. The angular velocity sensor 74 is composed of, for example, a gyroscope. The acoustic sensor 75 detects sounds around the pallet 21. The acoustic sensor 75 is composed of, for example, a microphone.

The captured image by the reading unit 71 and data of the measurement results by the illuminance sensor 72, the acceleration sensor 73, the angular velocity sensor 74, and the acoustic sensor 75 are transmitted to the control unit 80 by a non-illustrated wireless communication device via a non-illustrated edge computer, server, cloud, or the like.

The control unit 80 performs abnormality determination for the conveyance path 10 and the like. The control unit 80 is configured by a microcomputer or the like including a non-illustrated CPU, a storage unit composed of a non-transitory tangible storage medium such as a ROM, a RAM, a flash memory, or an HDD, and the like. CPU is an abbreviation for central processing unit, ROM is an abbreviation for read only memory, RAM is an abbreviation for random access memory, and HDD is an abbreviation for hard disk drive. As shown in FIG. 3, the control unit 80 includes an identification unit 81 and a determination unit 82.

The identification unit 81 identifies data generated when the pallet 21 is stopped (hereinafter referred to as stoppage data) from the data obtained by the sensor unit 70. Specifically, the identification unit 81 identifies data when the pallet 21 is stopped by the stopper 40 or 42, or when the pallet 21 is stopped as being come into contact with the pallet 20 that is stopped by the stopper 40 or 42, and this data is regarded as the stoppage data. The identification unit 81 then excludes the stoppage data from the data obtained by the sensor unit 70 and generates determination data to be used for the abnormality determination of the conveyance path 10.

The determination unit 82 determines the state of the conveyance path 10. Specifically, the control unit 80 stores a trained model for performing the abnormality determination in the conveyance path 10. This trained model is configured to output a numerical value indicating, for example, the probability of a presence of an abnormality in the conveyance path 10 when the determination data is input. The control unit 80 stores a plurality of trained models, and the determination unit 82 selects the trained model to be used for the determination depending on the situation. Then, the determination unit 82 inputs the determination data generated by the identification unit 81 into the selected trained model, and determines whether or not an abnormality has occurred in the conveyance path 10 based on the numerical value output from the trained model. For example, when the output value is greater than a predetermined threshold value, the determination unit 82 determines that an abnormality has occurred in the conveyance path 10, and when the output value is smaller than or equal to the threshold value, the determination unit 82 determines that no abnormality has occurred in the conveyance path 10. When it is determined that an abnormality has occurred in the conveyance path 10, the determination unit 82 calculates the position of the abnormal part using the determination data.

An operation of the conveyance system will now be described. In the conveyance system, the pallet 21 equipped with the sensor unit 70 is caused to patrol along the conveyance path 10, and data obtained during the patrol is used to determine whether there is an abnormality in the conveyance path 10.

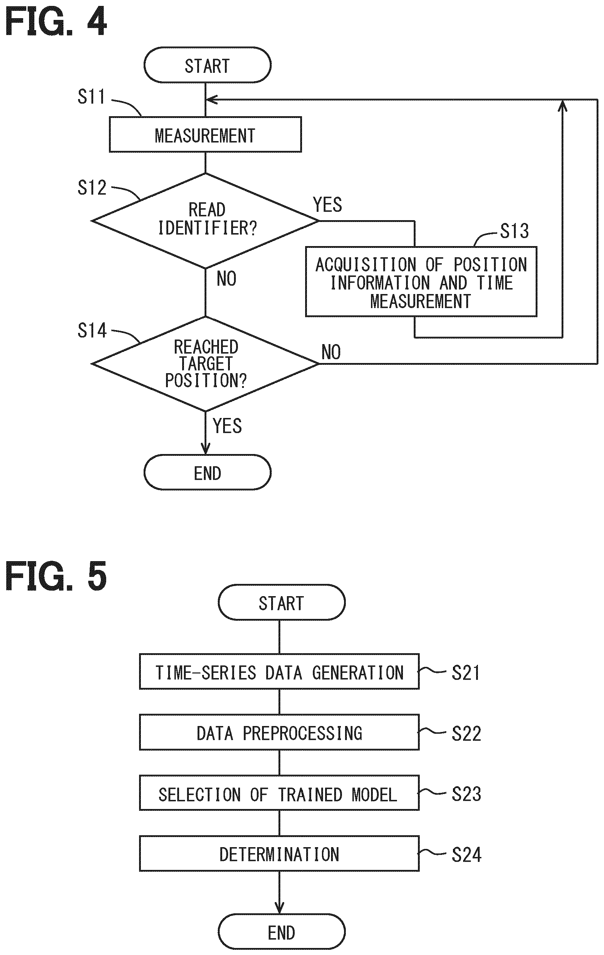

During the patrol by the sensor unit 70, the conveyance system performs the process shown in FIG. 4. The patrol by the sensor unit 70 is performed before or during the operation of the line. When the patrol by the sensor unit 70 is performed before the operation of the line, the pallets 20 other than the pallet 21 travel along the conveyance path 10 in an empty state with no workpieces 100 mounted thereon. When the patrol by the sensor unit 70 is performed during the operation of the like, the processing device 30 is set not to process the items on the pallet 21.

In step S11, the sensor unit 70 obtained data relating to the pallet 21. Specifically, the reading unit 71 captures an image of the periphery of the pallet 21 using a camera. The illuminance sensor 72 measures the illuminance of the range captured by the reading unit 71. The acceleration sensor 73 measures the accelerations of the pallet 21 in the X, Y, and Z directions. The angular velocity sensor 74 measures the angular velocities of the pallet 21 around the axes in the X, Y, and Z directions. The acoustic sensor 75 measures the sounds on the periphery of the pallet 21. Data of such as captured images and measurement results obtained by the sensor unit 70 are periodically transmitted to the control unit 80. The data obtained by the sensor unit 70 may be transmitted to the control unit 80 all at once after the patrol is completed.

In a subsequent step S12, the sensor unit 70 analyzes the image captured by the reading unit 71 to determine whether or not the reading unit 71 has read the identifier 61. When it is determined that the reading unit 71 has read the identifier 61, the process proceeds to step S13. When it is determined that the reading unit 71 has not been read the identifier 61, the process proceeds to step S14.

In step S13, the sensor unit 70 obtains the position information and the like stored in the identifier 61 from the image captured by the reading unit 71. The sensor unit 70 stores the time when the identifier 61 is read. After step S13, the process proceeds to step S11.

In step S14, the sensor unit 70 determines whether or not the pallet 21 has reached a destination position. When it is determined that the pallet 21 has reached the destination position, the process ends. When it is determined that the pallet 21 has not reached the destination position, the process proceeds to step S11.

When the sensor unit 70 has finished patrolling the conveyance path 10, the conveyance system performs an abnormality determination process shown in FIG. 5.

In step S21, the control unit 80 generates time series data by arranging in time series the data transmitted from the sensor unit 70 in the process shown in FIG. 4.

In a subsequent step S22, the identification unit 81 performs pre-processing of the time series data for the abnormality determination. That is, the identification unit 81 excludes the stoppage data from the time series data, and uses the data generated thereby as the determination data.

The identification unit 81 identifies the stoppage data based on the data generated by the reading unit 71 reading the identifier 61. Specifically, based on the time stored in step S13, the identification unit 81 identifies, as the stoppage data, the data during the period when the identifier 61 is being read by the reading unit 71 from the time series data of the acceleration sensor 73, the angular velocity sensor 74, and the acoustic sensor 75. Then, the identification unit 81 excludes the stoppage data from the time series data of the acceleration sensor 73 and the like. As a result, the data during the stoppage due to the stoppers 40 and 42 or due to a non-illustrated stopper for the waiting for the replacement of the pallet or the like is excluded from the time series data. Thus, time series data of when the pallet 21 is moving at a constant speed, when the pallet 21 passes through the abnormal part of the conveyance path 10, and when the pallet 21 is being stopped by the stopper 41 remain, and the remaining time series data forms the determination data.

In step S22, in addition to the exclusion of the stoppage data, the time series data is subjected to processing such as processing of missing values and outliers and processing of extraction of features, and thus section data of an arbitrary length, which is to be used in step S24, is generated.

In a subsequent step S23, the determination unit 82 selects the trained model to be used for the abnormality determination from the plurality of trained models stored in the control unit 80.

In a subsequent step S24, the determination unit 82 performs the abnormality determination in the conveyance path 10. That is, the determination unit 82 inputs the determination data generated in step S22 into the trained model selected in step S23. Then, the determination unit 82 determines whether or not an abnormality has occurred in the conveyance path 10 based on the output value of the trained model. When it is determined that the abnormality has occurred in the conveyance path 10, the determination unit 82 estimates the position of the abnormal part based on the position information of the identifier 61 included in the time series data. After step S24, the process ends.

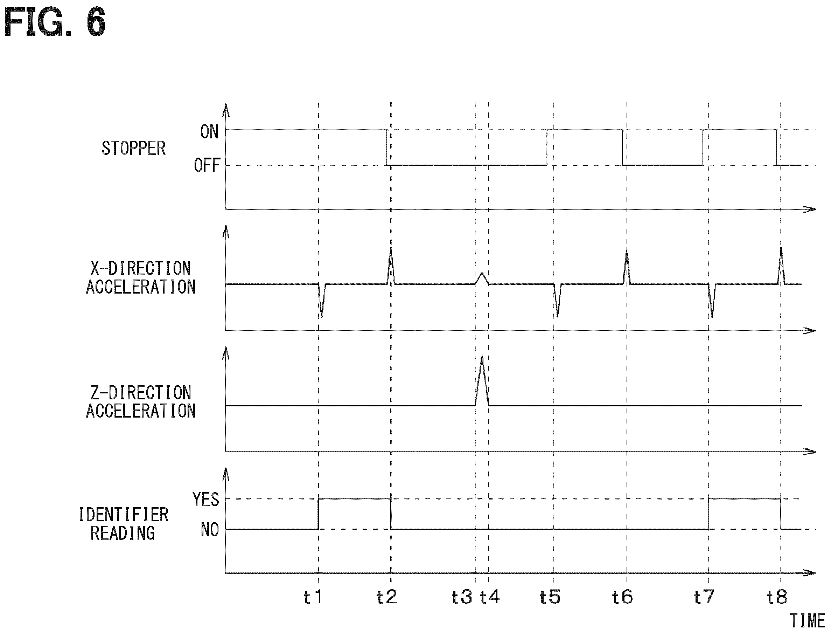

The following describes effects achieved by the present embodiment. Here, it will be described in a case of the conveyance system in which the conveyance path 12 is disposed next to conveyance path 11, and an abnormality has occurred at a part of the conveyance path 11 between the stopper 40 and the processing device 30. The part where the abnormality has occurred is referred to as the abnormal part P. In this case, the time series data of the sensor unit 70 is, for example, as shown in FIG. 6. The abnormality in the conveyance path 11 here is, for example, unevenness on the upper surface of the conveyance path 11 caused by loosening of the conveyor chain.

FIG. 6 shows the time series data of a case where there is no pallet 20 stopped by the stopper 40 when the pallet 21 enters the conveyance path 11. In FIG. 6, the top graph shows the operations of the stoppers 40, 41, and 42. FIG. 6 also shows the time series data from the time when the pallet 21 enters the conveyance path 11 to the time when the pallet 21 resumes moving after stopped by the stopper 42.

When the pallet 21 enters the conveyance path 11, the stopper 40 is activated and the pallet 21 comes into contact with the stopper 40 at time t1. As a result, the acceleration sensor 73 detects a negative acceleration in the X direction in step S11. Further, the reading unit 71 captures the image of the identifier 61a, and the time t1 that is the start time of reading the identifier 61a is stored in step S13. The capturing of the image of the identifier 61a is continued while the pallet 21 is being stopped.

When the stopper 40 is released and the movement of the pallet 21 is resumed at time t2, the acceleration sensor 73 detects a positive acceleration in the X direction in step S11. Further, the reading unit 71 ends the image capturing of the identifier 61a. The time stored in step S13 is kept until the image capturing of the identifier 61a is ended, and the sensor unit 70 stores the time t2 that is the time when the reading of the identifier 61a is ended.

After resuming the movement, the pallet 21 moves at a constant speed and passes through the abnormal part P between time t3 and time t4. As a result, in step S11, the acceleration sensor 73 detects the accelerations in the X and Z directions.

After passing through the abnormal part P, the pallet 21 moves at a constant speed toward the processing device 30. When the pallet 21 reaches the vicinity of the processing device 30, the stopper 41 is activated, and the pallet 21 comes into contact with the stopper 41 at time t5. As a result, the acceleration sensor 73 detects a negative acceleration in the X direction in step S11.

When the stopper 41 is released and the movement of the pallet 21 is resumed at time t6, the acceleration sensor 73 detects a positive acceleration in the X direction in step S11. After the movement of the pallet 21 is resumed, the pallet 21 moves at a constant speed and enters the conveyance path 12.

When the pallet 21 enters the conveyance path 12, the stopper 42 is activated, and the pallet 21 comes into contact with the stopper 42 at time t7. As a result, the acceleration sensor 73 detects a negative acceleration in the X direction in step S11. The reading unit 71 captures the image of the identifier 61d, and in step S13, the time t7 that is the start time of reading the identifier 61d is stored.

When the stopper 42 is released and the movement of the pallet 21 is resumed at time t8, the acceleration sensor 73 detects a positive acceleration in the X direction in step S11. The reading unit 71 ends the image capturing of the identifier 61d. The time stored in step S13 is kept until the image capturing of the identifier 61d is ended, and the sensor unit 70 stores time t8 that is the time when reading of the identifier 61d is ended.

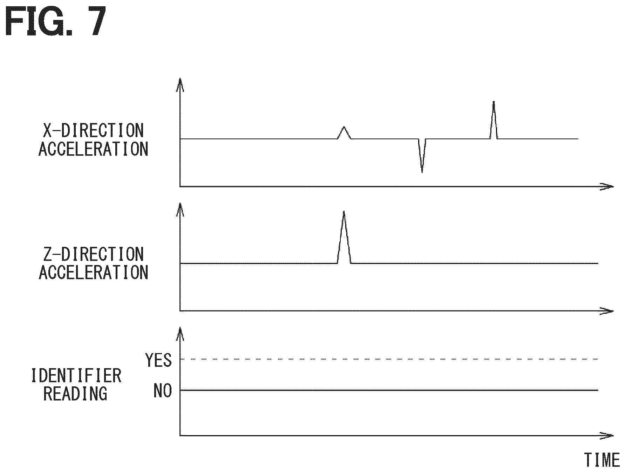

When the time series data of FIG. 6 is generated in step S21 in this manner, the determination data is generated in step S22 as follows. That is, based on the start time t1 and the end time t2 of the reading of the identifier 61a stored by the sensor unit 70, the section of the time series data from the time t1 to the time t2 is identified as the stoppage data and is excluded from the time series data. Also, based on the start time t7 and the end time t8 of the reading of the identifier 61d stored by the sensor unit 70, the section of the time series data from the time t7 to the time t8 is identified as the stoppage data and is excluded from the time series data. As a result, the determination data shown in FIG. 7 is generated.

In the determination data shown in FIG. 7, the data obtained while the pallet 21 is being stopped by the stoppers 40 and 42 is excluded. On the other hand, data when the pallet 21 passes through the abnormal part P and data when the pallet 21 is being stopped by the stopper 41 in the vicinity of the processing device 30 are kept without being excluded. By inputting this determination data into the trained model, abnormalities in the conveyance path 10 are detected. Further, the position of the abnormal part P is calculated based on the time when the pallet 21 passes through the abnormal part P and the time when the pallet 21 is stopped by the stopper 41 in the determination data.

It is possible to detect abnormalities such as a decrease in a conveying speed based on the time stored in step S13. For example, by storing the time t2 and the time t7 in FIG. 6, it is possible to calculate the conveying speed from the stopper 40 to the stopper 42 and to determine whether the conveying speed is within a normal range.

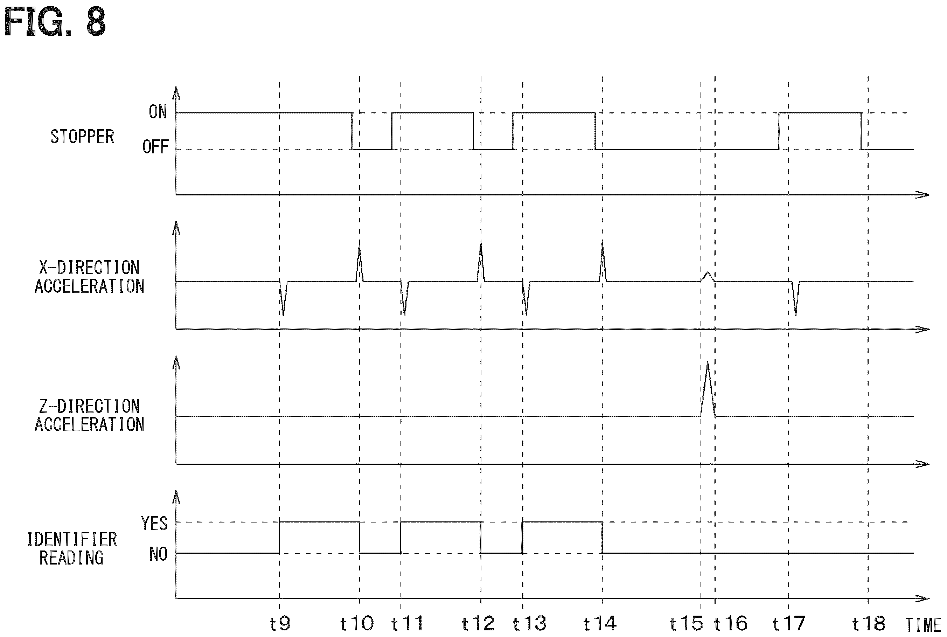

FIG. 8 shows time series data in a case where, when the pallet 21 enters the conveying path 11, the conveyance path 11 is congested with multiple pallets 20 and the pallet 21 is stopped as the third pallet in the line of pallets 20 stopped by the stopper 40. FIG. 8 shows the time series data from the time when the pallet 21 enters the conveyance path 11 to the time when the pallet 21 resumes moving after being stopped by the stopper 41.

When the pallet 21 enters the conveyance path 11, the stopper 40 is activated and the two pallets 20 are stopped. At time t9, the pallet 21 comes into contact with the second pallet 20 from the front. As a result, the acceleration sensor 73 detects a negative acceleration in the X direction in step S11. Furthermore, the reading unit 71 captures the image of the identifier 61c, and in step S13, time t9 that is the start time of reading the identifier 61c is stored.

When the stopper 40 is released and the pallets 20 resume moving in order from the leading pallet 20. When the movement of the pallet 21 resumes at time t10, the acceleration sensor 73 detects a positive acceleration in the X direction in step S11. Furthermore, the reading unit 71 ends to capture the image of the identifier 61c. The sensor unit 70 stores time t10 that is the end time of reading the identifier 61c.

When the leading pallet 20 passes through the stopper 40, the stopper 40 is activated and the second pallet 20 comes into contact with the stopper 40 and stops, so the pallet 21 comes into contact with this pallet 20 at time t11 As a result, the acceleration sensor 73 detects a negative acceleration in the X direction in step S11. Furthermore, the reading unit 71 captures the image of the identifier 61b, and in step S13, the time t11, which is the start time of reading the identifier 61b, is stored.

When the stopper 40 is released, the leading pallet 20 thus resumes its movement and the pallet 21 resumes its movement at t12. Thus, the acceleration sensor 73 detects a positive acceleration in the X direction in step S11. Furthermore, the reading unit 71 ends to capture the image of the identifier 61b. The sensor unit 70 stores the time t12, which is the end time of reading the identifier 61b.

When the leading pallet 20 passes through the stopper 40, the stopper 40 is activated and the pallet 21 comes into contact with the stopper 40 at time t13. As a result, the acceleration sensor 73 detects a negative acceleration in the X direction in step S11. Furthermore, the reading unit 71 captures the image of the identifier 61a, and the time t13, which is the start time of reading the identifier 61a, is stored in step S13.

When the stopper 40 is released and the movement of the pallet 21 is resumed at time t14, the acceleration sensor 73 detects a positive acceleration in the X direction in step S11. Furthermore, the reading unit 71 ends to capture the image of the identifier 61a. The sensor unit 70 stores the time t14, which is the end time of reading the identifier 61a.

After resuming its movement, the pallet 21 moves at a constant speed and passes through the abnormal part P between time t15 and time t16. As a result, the acceleration sensor 73 detects the acceleration in the X and Z directions in step S11.

After passing through the abnormal part P, the pallet 21 moves at a constant speed toward the processing device 30. When the pallet 21 reaches the vicinity of processing device 30, the stopper 41 is activated, and the pallet 21 comes into contact with the stopper 41 at time t17. As a result, the acceleration sensor 73 detects a negative acceleration in the X direction in step S11.

When the stopper 41 is released and the movement of the pallet 21 is resumed at time t18, the acceleration sensor 73 detects a positive acceleration in the X direction in step S11. After resuming its movement, the pallet 21 moves at a constant speed and enters the conveyance path 12.

Thereafter, similarly to the case of FIG. 6, data from the time when the pallet 21 enters the conveyance path 12 and is stopped by the stopper 42 to the time when the pallet 21 resumes its movement is obtained.

When the time series data of FIG. 8 is generated in step S21 in this manner, the determination data is generated in step S22 as follows. That is, based on the start time t9 of reading the identifier 61c and the end time t10 of reading the identifier 61c stored by the sensor unit 70, the section of the time series data from the time t9 to the time t10 is identified as the stoppage data and is excluded from the time series data. Based on the start time t11 of reading the identifier 61b and the end time t12 of reading the identifier 61b stored by the sensor unit 70, the section of the time series data from the time t11 to the time t12 is identified as the stoppage data and is excluded from the time series data. Based on the start time t13 and the end time t14 of reading the identifier 61a stored by the sensor unit 70, the section of the time series data from the time t13 to the time t14 is identified as the stoppage data and is excluded from the time series data. Furthermore, based on the start time of reading the identifier 61d and the end time of reading the identifier 61d stored by the sensor unit 70, the section during which the sensor unit 70 is stopped by the stopper 42 is identified as the stoppage data, and is excluded from the time series data. As a result, data similar to the determination data shown in FIG. 7 is generated.

In other words, in the present embodiment, it is possible to make uniform the length of the determination data between the case where the front of the pallet 21 is empty and the case where the front of the pallet 21 is crowded with other pallets 20 so that the time period in which the pallet 21 is being stopped by the stopper 40 or the like is long.

As described above, in the conveyance system, the pallet 20 waiting to be processed by the processing device 30 is stopped by the stopper 40. Further, the pallet 20 waiting for the switching of the conveyance path is stopped by the stopper 42. In addition, in the non-illustrated conveyance path, the pallet 20 waiting for the workpiece 100 to be transferred to another pallet is stopped by a non-illustrated stopper. The times required for these stops vary irregularly over a wide range, from several hundred milliseconds to several tens of seconds or even several minutes, depending on the number of pallets 20 lined up in front of the stopper.

Therefore, if the determination data is generated with the stoppage data included in the time series data of the sensor unit 70, the length of the determination data changes every time the sensor unit 70 patrols. Such data is difficult to use as input data for a trained model, making it difficult to determine abnormalities.

On the other hand, in the present embodiment, the stoppage data is identified and removed from the time series data, and the length of the determination data is made uniform to have the same format, thereby obtaining easy-to-use determination data. As a result, it becomes easy to compare data and analyze data. Hence, it becomes easy to perform abnormality determination.

In the present embodiment, as described above, the stoppage data is identified from the data obtained by the sensor unit 70. Therefore, it possible to reduce the variation in the amount of determination data, and it becomes easier to determine whether there is an abnormality in the conveyance path 10.

According to the embodiment described above, the following effects can be achieved.
(1) The identification unit 81 identifies the stoppage data from the time series data obtained by the sensor unit 70. According to this, the time length of the determination data can be made uniform by excluding the stoppage data from the time series data.
(2) The sensor unit 70 obtains data on the position of the pallet 21, and the identification unit 81 identifies the stoppage data from this obtained data. Therefore, it is possible to perform the abnormality determination after excluding the stoppage data from the position data.
(3) The sensor unit 70 obtains data on the acceleration of the pallet 21, and the identification unit 81 identifies the stoppage data from this obtained data. The acceleration detected when the pallet 21 comes into contact with the stopper 40 or 42 or comes into contact with the pallet 20 being stopped by the stopper 40 or 42 occurs regardless of any abnormality in the conveyance path 10, and becomes noise in the determination data. To address this, since the stoppage data is identified from the acceleration data and removed, the noise described above can be removed.
(4) The display unit 60 that displays the identifier 61 for identifying the position of the pallet 21 is provided, and the sensor unit 70 is provided with the reading unit 71 that reads the identifier 61. Further, the identification unit 81 identifies the stoppage data based on the data generated by the reading unit 71 reading the identifier 61.
   For example, it is conceivable a method of identifying a stoppage data by linking all stopper signals in the conveyance system with the signal from the sensor unit 70. In this method, however, the system is complicated, and the manufacturing costs and the like increase. In the present embodiment, on the other hand, the stoppage data can be identified based on the data obtained by the reading unit 71. Therefore, it is possible to simplify the system and reduce costs.
(5) The reading unit 71 is composed of the camera that captures an image of the identifier 61. By configuring the reading unit 71 with the camera, it is possible to distinguish between stationary and constant speed movement in a non-contact manner, which cannot be distinguished by the acceleration sensor 73 or the angular velocity sensor 74.

It is conceivable to detect the position of the pallet 21 by measuring the distance between the pallet 21 and the stopper 40 or the like by using, for example, an ultrasonic sensor, and to distinguish between the stopped state and the moving state at constant speed of the pallet 21. However, since there is a risk that a transmission signal of the ultrasonic sensor will interfere with a reception signal of the acoustic sensor 75, it is difficult to use the ultrasonic sensor and the acoustic sensor 75 together. On the other hand, since the reading unit 71 is composed of the camera, the reading unit 71 and the acoustic sensor 75 can be easily used together.

It is also conceivable to provide a radio frequency (RF) tag and a wireless communication circuit instead of the identifier 61 and the reading unit 71, and to detect the position of the pallet 21 by reading the information stored in the RF tag using radio waves, thereby distinguishing between the stopped state and the moving state at constant speed. However, because the radio waves used in the RF tag have a wide directivity, when the pallets 20 stopped by the stopper 40 or the like are arranged at narrow pitches, it is difficult to detect the precise position of the pallet 21. On the other hand, since the identifier 61 is made of a two-dimensional code such as a QR code and the reading unit 71 is composed of the camera, it is possible to detect the exact position of the pallet 21.

In addition, the combination of the two-dimensional code such as a QR code, which constitutes the identifier 61 and the camera, which constitutes the reading unit 71, is widely used in communication devices such as smartphones, and workers are also aware of points to be careful about when handling it, such as preventing dirt from adhering to it, so the barrier to introduction is low. By configuring the identifier 61 as the two-dimensional code, no special maintenance is required after the sticker on which the identifier 61 is printed is affixed to a wall or the like. Therefore, the maintenance costs for the conveyance system are reduced.

When the reading unit 71 is compose of the camera, data processing can be performed in conjunction with other sensors, making it easier to detect malfunctions in the reading unit 71 and allowing early action such as replacing the camera module to be taken. By performing pattern matching on the image captured by the reading unit 71, the amount of deviation between the designed stopping position by the stopper 40 or the like and the actual stopping position can be calculated. Thus, it becomes possible to detect functional deterioration of the stopper 40 or the like. By suppressing the image capture cycle and image quality in accordance with the cycle for detecting the position of the pallet 21 and the dimensions of the identifier 61, which are necessary for analyzing time-series data, the amount of data can be reduced.

(6) The reading unit 71 is provided on the pallet 21, and the display units 60 are provided corresponding to the number and positions of the pallets 20 stopped by the stoppers 40 and 42. Since the display units 60 are provided with the number according to the expected number of the pallets 20 to be stopped, the accuracy of identifying the stoppage data can be improved.

(7) The sensor unit 71 includes the illuminance sensor 72 that measures the illuminance of the display unit 60. In such a configuration, it is possible to determine whether or not the display unit 60 is in a state in which the identifier 61 can be correctly read by the reading unit 71, by using the measurement value of the illuminance sensor 72.

(8) The identification unit 81 regards the data while the reading unit 71 is reading the identifier 61 as the stoppage data. This allows the stoppage data to be accurately identified.

(9) The determination unit 82 determines the state of the conveyance path 10 based on the determination data generated by excluding the stoppage data from the data obtained by the sensor unit 70. This improves the accuracy of abnormality determination in the conveyance path 10.

### (Second Embodiment)

A second embodiment will be described. In the present embodiment, the positions of the display unit 60 and the reading unit 71 are changed from those in the first embodiment, but other configurations are similar to those in the first embodiment, so only the configurations different from the first embodiment will be described.

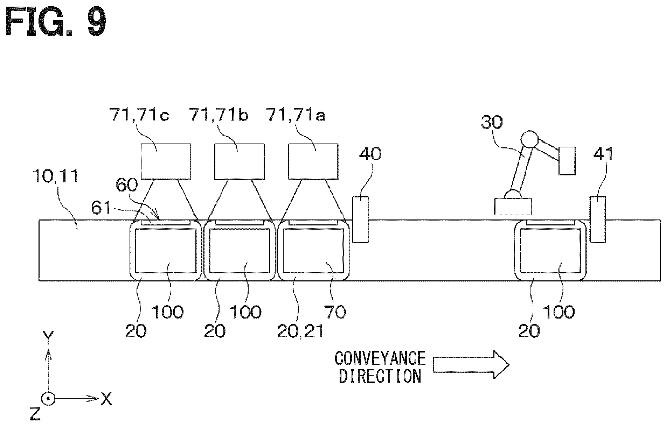

As shown in FIG. 9, in the present embodiment, the display unit 60 is provided on each pallet 20. The identifier 61 stores information about the pallet 20 on which the display unit 60 is provided.

In the present embodiment, the reading unit 71 is disposed near the conveyance path 10. One or more reading units 71 are provided for each stopping position. There is no limit to the number of reading units 71, but it is desirable to have the reading units 71 with the number according to the number of pallets 20 expected to congest.

In an example shown in FIG. 9, three reading units 71 are disposed in front of the stopper 40 on the conveyance path 11. The three reading units 71 are referred to as reading units 71a to 71c in the order as separating from the stopper 40.

In the present embodiment, in step S12, it is determined whether the identifier 61 has been read by any one of the multiple reading units 71 disposed in the conveyance system. Then, in step S13, the position information of the reading unit 71 that has read the identifier 61, the information of the read identifier 61, and the time when the identifier 61 has been read are obtained.

For example, when the pallet 21 is stopped at the stopper 40 as shown in FIG. 9, the reading unit 71a reads the identifier 61 of the pallet 21, thereby obtaining information that the pallet 21 is located at the head of the line of pallets 20 stopped by the stopper 40.

Similarly, when the reading unit 71b reads the identifier 61 of the pallet 21, information that the pallet 21 is the second pallet in the line of pallets 20 stopped by the stopper 40 is obtained. When the reading unit 71c reads the identifier 61 of the pallet 21, information that the pallet 21 is the third pallet in the line of pallets 20 stopped by the stopper 40 is obtained.

The time series data includes these information regarding the stopping position of the pallet 21 and the like. Then, in step S22, the stoppage data is identified based on these information and excluded from the time series data.

The display unit 60 may be provided only on the pallet 21, or may be provided on part or all of the other pallets 20 in the conveyance path, in addition to the pallet 21. By providing the display units 60 on the other pallets 20 as well, it is possible to understand the progress of the other pallets 20, and to respond to irregular situations such as the stopping of a pallet 20 due to a malfunction of the processing device 30, or intermediate removal or re-insertion of a product. In addition, by analyzing the stopped time of the pallets 20, it is possible to improve bottleneck processes and increase production efficiency. In this way, the results of reading the identifier 61 can be used not only for the abnormality determination in the conveyance path 10, but also for product lot management and tracing.

The present embodiment can achieve the similar effects to those of the first embodiment from the similar configuration and operation to those of the first embodiment.

According to the embodiment described above, the following effects can be achieved.
(1) The display unit 60 is provided on the pallet 21, and the reading units 71 are provided corresponding to the number and positions of the pallets 20 stopped by the stopper 40 or 42. In this configuration, by providing the display units 60 on the other pallets 20 in the conveyance path in addition to the pallet 21, it is possible to understand the progress of the other pallets 20 and the like.

### (Other Embodiments)

The present disclosure is not limited to the embodiments described hereinabove, and can be appropriately modified. Individual elements or features of a particular embodiment are not necessarily essential unless it is specifically stated that the elements or the features are essential in the foregoing description, or unless the elements or the features are obviously essential in principle. Further, in each of the embodiments described above, when numerical values such as the number, quantity, range, and the like of the constituent elements of the embodiment are referred to, except in the case where the numerical values are expressly indispensable in particular, the case where the numerical values are obviously limited to a specific number in principle, and the like, the numerical values are not limited to the specific numbers.

The control unit and the method thereof described in the present disclosure may be implemented by a special purpose computer which is configured with a memory and a processor programmed to execute one or more particular functions embodied in computer programs of the memory. Alternatively, the control unit and the method thereof described in the present disclosure may be implemented by a special purpose computer configured as a processor with one or more special purpose hardware logic circuits. Alternatively, the control unit and the method thereof described in the present disclosure may be realized by one or more dedicated computers configured to include a combination of a processor and a memory which are programmed to fulfil one or more functions and a processor configured to include one or more hardware logic circuits. The computer program may be stored, as instructions to be executed by a computer, in a tangible non-transitory computer-readable storage medium.

### (Aspects of Present Disclosure)

### [First Aspect]

A conveyance system includes:
a conveyance body (20, 21) that moves along a conveyance path (10, 11, 12, 13);
a sensor unit (70) that obtains data relating to the conveyance body; and
an identification unit (81) that identifies a stoppage data generated due to the conveyance body stopping from the data obtained by the sensor unit.

### [Second Aspect]

In the conveyance system as in the first aspect, the identification unit identifies the stoppage data from a time series data obtained by the sensor unit.

### [Third Aspect]

In the conveyance system as in the first or second aspect, the sensor unit acquires data on a position of the conveyance body, and the identification unit identifies the stoppage data from the data on the position of the conveyance body.

### [Fourth Aspect]

In the conveyance system as om any one of the first to third aspects, the sensor unit acquires data on an acceleration of the conveyance body, and the identification unit identifies the stoppage data from the data on the acceleration of the conveyance body.

### [Fifth Aspect]

The conveyance system as in any one of the first to fourth aspects further includes a display unit (60) that displays an identifier (61) for identifying a position of the conveyance body, and in which
the sensor unit includes a reading unit (71) that reads the identifier, and the identification unit identifies the stoppage data based on data generated by the reading unit reading the identifier.

### [Sixth Aspect]

In the conveyance system as in the fifth aspect, the reading unit is composed of a camera that captures an image of the identifier.

### [Seventh Aspect]

In the conveyance system as in the fifth or sixth aspect, the conveyance path is provided with a stopping part (40, 42) that stops the conveyance body, the reading unit is disposed on the conveyance body, and the display unit is provided corresponding to a number and a position of the conveyance body stopped by the stopping part.

### [Eighth Aspect]

In the conveyance system as in the fifth or sixth aspect, the conveyance path is provided with a stopping part (40, 42) that stops the conveyance body, the display unit is disposed on the conveyance body, and the reading unit is provided corresponding to a number and a position of the conveyance body stopped by the stopping part.

### [Ninth Aspect]

In the conveyance system as in any one of the fifth to eighth aspects, the sensor unit includes an illuminance sensor (72) that detects an illuminance of the display unit.

### [Tenth Aspect]

In the conveyance system as in any one of the fifth to ninth aspects, the identification unit identifies data while the identifier is being read by the reading unit as the stoppage data.

### [Eleventh Aspect]

The conveyance system as in any one of the first to tenth aspects further includes a determination unit (82) that determines a state of the conveyance path based on determination data that is generated by excluding the stoppage data from the data obtained by the sensor unit.

## Claims

1. A conveyance system comprising:
a conveyance body (20, 21) that moves along a conveyance path (10, 11, 12, 13);
a sensor unit (70) that obtains data relating to the conveyance body; and
an identification unit (81) that identifies a stoppage data generated due to the conveyance body stopping from the data obtained by the sensor unit.

2. The conveyance system according to claim 1, wherein
the identification unit identifies the stoppage data from a time series data obtained by the sensor unit.

3. The conveyance system according to claim 1, wherein
the sensor unit acquires data on a position of the conveyance body, and
the identification unit identifies the stoppage data from the data on the position of the conveyance body.

4. The conveyance system according to claim 1, wherein
the sensor unit acquires data on an acceleration of the conveyance body, and
the identification unit identifies the stoppage data from the data on the acceleration of the conveyance body.

5. The conveyance system according to claim 1 or 2, further comprising:
a display unit (60) that displays an identifier (61) for identifying a position of the conveyance body, wherein
the sensor unit includes a reading unit (71) that reads the identifier, and
the identification unit identifies the stoppage data based on data generated by the reading unit reading the identifier.

6. The conveyance system according to claim 5, wherein
the reading unit is composed of a camera that captures an image of the identifier.

7. The conveyance system according to claim 5, wherein
the conveyance path is provided with a stopping part (40, 42) that stops the conveyance body,
the reading unit is disposed on the conveyance body, and
the display unit is provided corresponding to a number and a position of the conveyance body stopped by the stopping part.

8. The conveyance system according to claim 5, wherein
the conveyance path is provided with a stopping part (40, 42) that stops the conveyance body,
the display unit is disposed on the conveyance body, and
the reading unit is provided corresponding to a number and a position of the conveyance body stopped by the stopping part.

9. The conveyance system according to claim 5, wherein
the sensor unit includes an illuminance sensor (72) that detects an illuminance of the display unit.

10. The conveyance system according to claim 5, wherein
the identification unit identifies data while the identifier is being read by the reading unit as the stoppage data.

11. The conveyance system according to claim 1 or 2, further comprising:
a determination unit (82) that determines a state of the conveyance path based on determination data that is generated by excluding the stoppage data from the data obtained by the sensor unit.
